# EUROPEAN PATENT SPECIFICATION

(11) **EP 0 687 628 B1**
(45) Date of publication and mention of the grant of the patent: **28.10.1998**
(21) Application number: 95108563.8
(22) Date of filing: 03.06.1995
(51) Int. Cl.: B65B 5/10, B65G 47/76

(54) **Device for sorting and stacking substantially flat articles into box-like containers**
Vorrichtung zum Sortieren und Stapeln von flachen Gegenständen in schachtelartigen Behältern
Dispositif pour trier et empiler des articles plats dans des récipients sous forme de boîte

(30) Priority: 15.06.1994 IT MI941245
(43) Date of publication of application: 20.12.1995
(73) Proprietor: ALCATEL ALSTHOM COMPAGNIE GENERALE D'ELECTRICITE, 75008 Paris (FR)
(72) Inventor: Passero, Adolfo, I-81100 Caserta (IT)
(74) Representative: Pohl, Herbert, Dipl.-Ing.

(56) References cited:
- FR-A- 2 227 199
- US-A- 5 072 822

## Description

The present invention relates to a device for sorting and stacking substantially flat articles into box-like containers which they are destined to, comprising at least one support anchored to a synchronous draw element dragging it along a closed loop path, passing through a loading station and at least one sorting and stacking station including at least one succession of containers; a carrying plate, fixed to the support and inclined upwards in the advancing direction, on which the articles to be transported from the loading station to the sorting station are loaded; ejector means located at the containers for taking the articles outside of the carrying plate upon command and letting them fall into respective containers by gravity.

More specifically, the present invention can be used in sorting plants operating in the field of publishing business or, particularly, in the clothing trade in which packets of folded articles are piled up into containers for making up packages.

As it is known, in such plants, articles provided with codes containing identification and eventually other information, are located, at at least one loading station including at least one loading position fed in succession with the articles to be sorted, on modules travelling along a closed path defined by a rail guide passing through a reading out and recognition station for the articles, where these codes are read out by suitable means arranged for the purpose, and one or more sorting stations, each including one or more sequences of box-like containers into which the articles, upon command of an electronic control system that controls the entire plant, are let to fall and are stacked therein to make up the packages.

There exist various devices for transporting, sorting and stacking articles into containers for making up packages, but they, when handling delicate articles, such as e.g. books with valuable dust-covers, or floppy articles, such as e.g. folded clothing items, have drawbacks either because the two functions, sorting and stacking are carried out separately, with interposition of chutes, or because the gravity trajectory travelled by the article falling into the container is too long and not straight-line, whereby highly undesired effects are produced, such as damages (e.g. scoring of the dust-covers), coiling up (of clothing items inside their packets) and untidy stacks as well.

In this situation, the main object of the present invention is to eliminate the above-mentioned drawbacks of the prior art.

Another object of the present invention is to provide a device which is capable of carrying out both sorting and sticking functions at the same time while allowing the discharge of the articles into the containers along a straight-line trajectory which is as short as possible.

Still another object of the present invention is so to design a device of the type mentioned above as to be simple and capable of sorting and stacking objects into low-walled containers.

These and other objects which will become more apparent in the following description, are achieved, according to the present invention, through a device for sorting and stacking substantially flat articles into box-like containers of the type mentioned at the outset, which is characterized in that the ejector means are designed to take the articles outside of the carrying plate across the trailing edge thereof in such a way that the velocity of the articles relative to a fixed reference system connected to the container during the discharge has a null component in the advancing direction of the carrying plate.

Further characteristics and advantages of the invention will become more apparent from the detailed description of a preferred, but not exclusive, embodiment thereof, taken in conjunction with the drawings, attached merely by way of a not limiting example, in which:
- Fig. 1 represents schematically a partial perspective view of the device when at a discharge container according to the invention;
- Fig. 2 represents schematically a partial elevation view of the device approaching a sorting station in accordance with the invention.

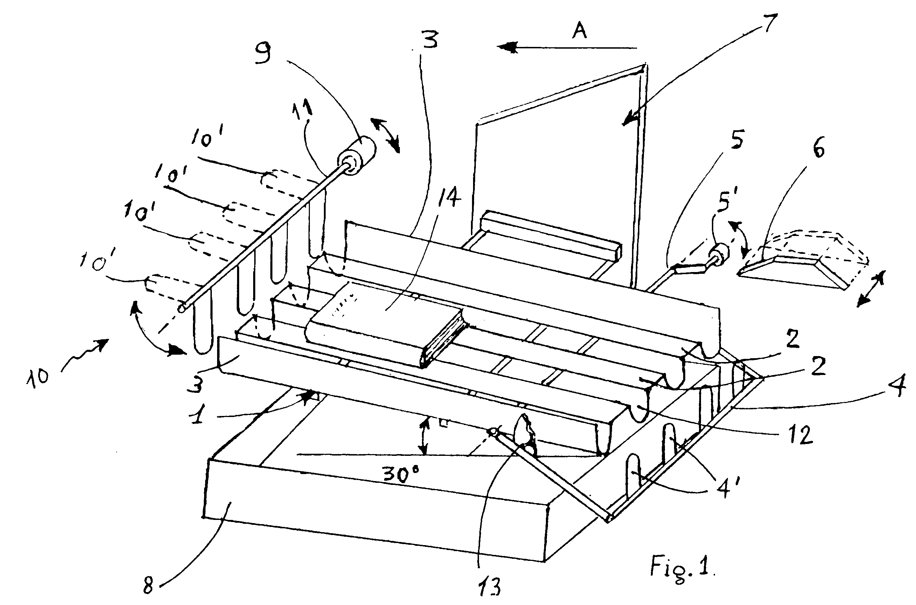

Referring now in particular to Fig. 1, the device according to the invention comprises at least one plate-shaped support 7 connected with a draw element of a synchronous transportation system (chain and sprocket) not shown in the figures and not described since it is known and of conventional type.

Rigidly fixed to the support is a plate for carrying the articles, inclined upwards in the support advancing direction indicated by the arrow A in the figures.

Preferably, the carrying plate makes an angle of 30 degrees with a horizontal plane.

In the embodiment shown in Fig. 1, the carrying plate is realized by a tray 1 provided with logitudinal grooves 12 interconnected by smoothed longitudinal carrying strips for supporting the articles 14 during motion.

The tray 1 is longitudinally bounded by limiting side walls 3 extending upwards above strips 2 and forming a reference transverse abutment for the articles.

Disposed in the vicinity of the rear trailing edge are enclosure means openable on command, designed to keep the articles during the motion and serving as a reference longitudinal abutment for the articles.

In the embodiment illustrated, the enclosure means comprise a rectangular frame 4 having one side hinged on the tray 1 near the trailing edge thereof and with the opposite side mounting a plurality of blades 4' in correspondence with the longitudinal grooves. A levering 5 rigidly fixed to the hinged side is designed to rotate the same when a roller fixed thereto abuts against a movable cam 6 connected to the structure of the plant.

In the sorting area, ejector means 10 are provided for taking the articles 14 outside the carrying plate on command and let them fall by gravity into the containers which they are destined to.

These ejector means are constituted by, e.g., a plurality of complanate blades rigidly fixed each other and by actuating means designed to move them from a rest position, in which they are out of the carrying plane, to an operative position in which they are inserted each in a corresponding longitudinal groove of the tray to abut against the leading edge of the items stopping their advancing motion.

In the embodiment shown, the complanate blades 10' are mounted on a horizontal shaft 11 extending transversely to the advancing direction and above the leading edge of the advancing tray. The shaft 11 is actuated by a motor 9 connected to the structure of the plant and driven to rotate the shaft one quarter turn thus moving the blades 10' from a horizontal rest position to a vertical operative position in which they are inserted each in the corresponding groove 12 of the tray 1.

The device in accordance with the present invention operates as follows.

The bar-coded articles to be sorted are suitably positioned on the tray 1 at the loading station of the plant and are transported up to the sorting station where collecting containers for making up packages are located.

At a labelling station (not shown) located along the path, the articles are provided with a second code containing other information such as, e.g., price, destination, date, etc. (when, for instance, it is desired to make a practice of a differentiated price).

These codes are read at a read-out station by suitable bar-code scanners (also not shown) and the electronic control system (neither shown nor described being known and conventional) on the basis of information received and program loaded, establishes what containers the articles are to be stacked into, and sends the suitable commands.

When the tray passes above the container which the loaded article is destined to, on command of the electronic control system, the motor 9 rotates one quarter turn the shaft 11 thus moving the blades 10' to the operative vertical position. This vertical position must be reached when the leading edge of the tray is of such a distance that the abutment against the article is not lost until it has left the carrying plane.

Obviously, such a distance depends on the slope of the tray and on the depth of the grooves, as well as on the length of the blades, i.e. if the blades are suddenly lowered before the arrival of the tray (as shown in Fig. 1), then the depth of the grooves and the length of the blades must be so adjusted that the abutment against the article is not lost.

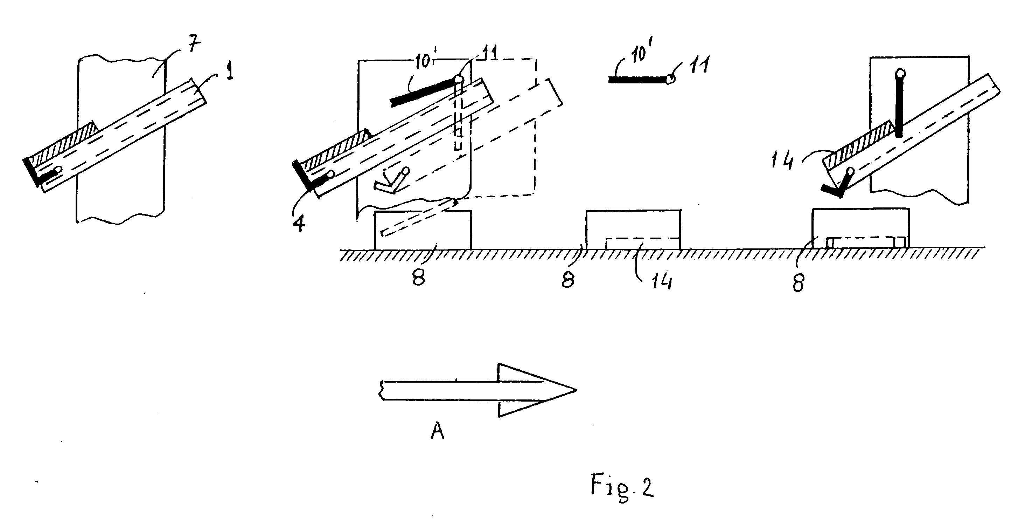

Viceversa, if the articles are loaded in abutment against the back enclosure (4, 4') as shown in Fig. 2, then the blades can be rotated gradually up to the vertical position to be reached in the back portion of the tray as shown in Fig. 2 and, in this circumstance, they can be shorter and the grooves can have a lower depth.

At the same time, still on command from the electronic control system, cam 6 is brought against roller 5' whereby the frame 4 is lowered to allow article 14 to be discharged into the underlying container 8.

A cam pawl 13, fixed to the tray, limits the rotation of the frame 4 and keeps it in its end positions.

When blades 10' come into abutment against article 14, the latter is stopped with respect to the fixed structure of the plant and therefore with respect to the container. The tray proceeds in the advancing motion with respect to the article and after some time the latter loses its support and is laid down smoothly on the bottom of the container or upon other articles already stacked in it (see Fig. 2).

Subsequently, recovery means (not shown and not described being of conventional type, and anyway not relevant to the present invention) reset the frame 4 to its closing upper position.

To be noted that the stacking position in the container depends exclusively on the reciprocal position between the contrasting blades 10' in their vertical position and the downstream (with respect to the advancing direction) wall of the container.

Thus the invention fully achieves all the objects mentioned at the outset.

In fact, as it appears from what said above, the device according to the invention operates in such a way as to discharge the articles in the most suitable way to avoid damages or undesired coiling up of the floppy articles.

The gravity trajectory is a straight-line trajectory (the velocity of the article relative to the container has a null component in the advancing direction) and has a minimized length (the device carries out both sorting and stacking operations; it needs neither interposed chutes nor spacings necessary for allowing opening of trap-doors).

This makes the device suitable to carry out the sorting of substantially flat articles of various kind such as books, magazines, audio/video cassettes and, in particular, floppy articles such as folded clothing items.

In fact, the articles travel in a low-sloped position and are laid down smoothly in the container without coiling up of the fold clothing items in the respective packets.

Moreover, with this device it is possible to stack simultaneously on a plurality of stacks by loading the articles aligned transversally on the tray.

Naturally, various modifications and variations are possible which, being obvious to those skilled in this art, should be understood as falling within the scope of this invention.

For instance, the contrasting blades for expelling the articles instead of rotating one quarter turn, can be tought as moving up and down in a vertical plane as the articles could be stopped through a push-bar connected to the tray and moved back upon command with a speed equal to the advancing speed; the recovery means for taking the frame back in closure position could be merely counterweights that, once the cam action is ended, take the frame back in its initial position by gravity.

Lastly, the materials, dimensions and construction details can be varied according to the type of plant and to needs and circumstances of production and use still fulfilling the characteristics illustrated, described and hereinafter claimed.

## Claims

1. Device for sorting and stacking substantially flat articles into box-like containers which they are destined to, in particular for use in sorting plants for making up packages, of the type comprising
• at least one support (7) anchored to a synchronous draw element capable of dragging it along a closed loop path through a loading station and at least one sorting and stacking station including at least one succession of said containers (8),
• a carrying plate (1)fixed to said at least one support (7) and inclined upwards in an advancing direction (A), on which articles (14) are loaded to be transported from said loading station to said at least one sorting and stacking station,
• ejector means (10) located at said containers (8) for driving the articles (14) out of said carrying plate (1) upon command and letting them fall into respective containers (8) by gravity,
characterized in that said ejector means (10) are designed to drive the articles (14) out of said carrying plate (1) across the trailing edge thereof in such a way that the velocity of the articles relative to a fixed reference system connected to the container (8) during the discharge has a null component in said advancing direction (A).

2. Device according to claim 1, characterized in that said carrying plate (1) makes an angle, preferably of 30 degrees, with a horizontal plane.

3. Device according to claim 1, characterized in that said ejector means (10) are fixed with respect to said reference system and are designed to come into abutment against the leading edge of the articles (14) stopping them in said advancing direction (A).

4. Device according to claim 1, characterized in that said carrying plate is formed by a loading tray (1) having a plurality of longitudinal grooves (12) interconnected by smoothed longitudinal carrying strips (2), said tray being bounded longitudinally by vertical walls (3) extending above said strips and, at the rear, by enclosure means (4,4') openable upon command.

5. Device according to claims 3 and 4, characterized in that said ejector means (10) comprise
• a plurality of complanate blades (10') rigidly fixed each other at one first end, and
• actuating means (9) for moving, upon command, said blades (10') from a rest position out of said carrying plate to an operative position in which they are inserted each into a corresponding one of said grooves (12) of said tray (1).

6. Device according to claim 5, characterized in that said blades (10') are mounted on a horizontal shaft (11) extending transversely of said advancing direction (A) and above the leading edge of said tray (1), said shaft being actuated by a motor (9) connected to the fixed structure of the plant and capable of rotating one quarter turn said horizontal shaft (11) to move said blades (10') from a horizontal rest position to a vertical operative position and vice-versa.

7. Device according to claim 4, characterized in that said enclosure means comprise
• a rectangular frame (4) having one side hinged on said tray near to the trailing edge thereon and rotatable in a vertical plane,
• a levering (5) for rotating said frame and terminating with a roller (5') designed to abut against a cam (6) connected to said reference system and slidable upon command,
• a plurality of vertical blades (4') fixed on the side of said frame opposite to the hinged side and designed to form a back closing wall,
• a cam pawl (13) fixed to said tray (1) and designed to limit the rotation of said frame (4) keeping it in its position, and
• recovery means for taking said frame back to the enclosure position once the articles are out of the tray.

8. Plant for sorting and stacking substantially flat articles into box-like containers which they are destined to for making up packages, in which the articles identified by a first bar code are transported along a closed loop path passing through at least one loading station including at least one loading point fed in succession with articles to be sorted, a read-out station for reading codes and recognizing the articles, and at least one sorting station including at least one succession of said containers, characterized in that it comprises at least one device for transporting the articles along said closed path of the type as set forth in the preceding claims.

9. Plant according to claim 8, further comprising means located upstream said read out station for attaching a second bar code to the articles.

10. Plant according to claim 9, characterized in that said second bar code comprises destination and price of the article.

## Patentansprüche

1. Vorrichtung zum Sortieren und Stapeln von im wesentlichen flachen Artikeln in schachtelförmige Behälter hinein, für die sie bestimmt sind, und insbesondere zur Verwendung in Sortieranlagen zur Herstellung von Paketen, mit:
- zumindest einer Stützeinrichtung (7), die mit einem synchronen Zugelement fest verbunden ist, welches dazu in der Lage ist, die Stützeinrichtung entlang eines geschlossenen Weges zu ziehen, durch eine Ladestation hindurch und durch zumindest eine Sortier- und Stapelstation, die zumindest eine Reihe von Behältern (8) aufweist;
- einer Tragplatte (1), die an der zumindest einen Stützeinrichtung (7) befestigt ist und die in einer Förderrichtung (A) nach oben geneigt verlaufend ausgebildet ist, und auf die Artikel (14) aufgeladen werden, um von der Ladestation zu der zumindest einen Sortier- und Stapelstation befördert zu werden;
- einer Auswurfeinrichtung (10), die bei den Behältern (8) angeordnet ist, um die Artikel (14) auf Anweisung hin von der Tragplatte (1) herunter zu verlagern und um diese mittels Schwerkraft in die jeweiligen Behälter (8) fallen zu lassen, **dadurch gekennzeichnet**,
daß die Auswurfeinrichtung (10) so ausgebildet ist, daß sie die Artikel (14) quer zu der Hinterkante der Tragplatte (1) von der Tragplatte (1) herunter verlagert, so daß die Geschwindigkeit der Artikel während des Auswurfs und relativ zu einem feststehenden Referenzsystem, welches mit dem Behälter (8) verbunden ist, eine Nullkomponente in der Förderrichtung (A) aufweist.

2. Vorrichtung nach Anspruch 1, dadurch gekennzeichnet, daß die Tragplatte (1) einen Winkel von vorzugsweise 30° zu einer horizontal verlaufenden Ebene einnimmt.

3. Vorrichtung nach Anspruch 1, dadurch gekennzeichnet, daß die Auswurfeinrichtung (10) relativ zu dem Referenzsystem feststehend ausgebildet ist und daß sie so ausgebildet ist, daß sie mit der Vorderkante der Artikel (14) in Anlage gelangt, und diese in Förderrichtung (A) anhält.

4. Vorrichtung nach Anspruch 1, dadurch gekennzeichnet, daß die Tragplatte durch ein Fach (1) ausgebildet ist, welches eine Mehrzahl von in Längsrichtung verlaufenden Nuten (12) aufweist, zwischen denen glatte und in Längsrichtung verlaufende Tragstreifen (2) angeordnet sind, wobei das Fach in der Längsrichtung durch vertikal angeordnete Wände (3) begrenzt ist, die sich bis oberhalb der Streifen (2) erstrecken, sowie am hinteren Ende des Faches eine Einfassung (4, 4') vorgesehen ist, die auf Anweisung hin zu öffnen ist.

5. Vorrichtung nach Anspruch 3 oder 4, dadurch gekennzeichnet, daß die Auswurfeinrichtung (10) umfaßt:
- eine Mehrzahl von ausgerichteten Blättern (10'), die feststehend an der Auswurfeinrichtung (10) an einem ersten Ende davon befestigt sind; und
- eine Betätigungseinrichtung (9), die die Blätter (10') auf Anweisung hin verlagert, von einer Ruheposition außerhalb der Tragplatte in eine Betriebsposition, in der die Blätter in jeweils eine zugehörige Nut (12) des Faches (1) eingreifen.

6. Vorrichtung nach Anspruch 5, dadurch gekennzeichnet, daß die Blätter (10') an einer horizontal verlaufenden Welle (11) montiert sind, die sich quer zu der Förderrichtung (A) erstreckt und die oberhalb der Vorderkante des Faches (1) liegt, wobei die Welle (11) durch einen Motor (9) betätigt wird, der mit der feststehenden Anlage verbunden ist und der dazu in der Lage ist, die horizontal verlaufende Welle (11) um eine Viertel Umdrehung zu drehen, um die Blätter (10') von einer horizontalen Ruheposition in eine vertikale Betriebsposition zu verlagern, und umgekehrt.

7. Vorrichtung nach Anspruch 4, dadurch gekennzeichnet, daß die Auswurfeinrichtung umfaßt:
- einen rechteckigen Rahmen (4), dessen eine Seite an dem Fach in der Nähe der Hinterkante davon angelenkt ist und der in einer vertikalen Ebene verschwenkbar ist;
- eine Hebeleinrichtung (5), um den Rahmen zu verschwenken und die in einer Walze (5') endet, die vorgesehen ist, um mit einem Nocken (6) in Anlage zu gelangen, der mit dem Referenzsystem verbunden ist, und die auf Anweisung hin verlagerbar ist;
- eine Mehrzahl von vertikal angeordneten Blättern (4'), die an der Seite des Rahmens befestigt sind, die der angelenkten Seite gegenüberliegt und die vorgesehen sind, um eine hintere abschließende Wand auszubilden;
- eine Nockenklaue (13), die an dem Fach (1) befestigt ist und die vorgesehen ist, um die Drehung des Rahmens (4) zu begrenzen, um diesen in Position zu halten; und
- Wiederherstellungsmittel, um den Rahmen in die Einfassungsposition zurück zu bewegen, sobald die Artikel das Fach (1) verlassen haben.

8. Anlage zum Sortieren und Stapeln von im wesentlichen flachen Artikeln in schachtelförmige Behälter hinein, für die sie bestimmt sind, um Pakete herzustellen, wobei die Artikel durch einen ersten Barcode identifiziert werden und entlang eines geschlossenen Weges gefördert werden, durch zumindest eine Ladestation hindurch, die zumindest eine Ladeposition aufweist, an der Artikel in Reihe zugeführt werden, die zu sortieren sind, sowie durch eine Auslesestation hindurch, zum Auslesen der Codes und zum Erkennen der Artikel, und durch eine Sortierstation hindurch, die zumindest eine Reihe von Behältern aufweist, dadurch gekennzeichnet, daß die Vorrichtung zumindest eine Einrichtung zum Fördern der Artikel entlang dem geschlossenen Weg aufweist, die vom Typ ist, wie er in den vorangegangenen Ansprüchen definiert ist.

9. Anlage nach Anspruch 8, weiterhin mit einer Einrichtung, die stromaufwärts der Lesestation angeordnet ist, um einen zweiten Barcode an den Artikeln anzubringen.

10. Anlage nach Anspruch 9, dadurch gekennzeichnet, daß der zweite Barcode einen Zielort und den Preis des Artikels beinhaltet.

## Revendications

1. Dispositif destiné à trier et à empiler des articles sensiblement plats dans des récipients en forme de boîte destinés à cet effet, notamment destiné à être utilisé dans des installations de tri pour confectionner des emballages, du type comprenant:
- au moins un support (7) ancré à un élément de tirage synchrone capable de le tirer suivant une trajectoire en boucle fermée au travers d'un poste de chargement et au moins un poste de tri et d'empilage comprenant au moins une succession desdits récipients (8),
- une plaque de transport (1) fixée sur ledit au moins un support (7) et inclinée vers le haut dans la direction de l'avancement (A), sur laquelle des articles (14) sont chargés pour être transportés depuis ledit poste de chargement vers ledit au moins un poste de tri et d'empilage,
- des moyens d'éjection (10) placés au niveau desdits récipients (8) destinés à entraîner les articles (14) hors de ladite plaque de transport (1) en réponse à un ordre donné et à les faire tomber dans des récipients (8) respectifs par gravité,
caractérisé en ce que lesdits moyens d'éjection (10) sont conçus pour entraîner les articles (11) hors de ladite plaque de transport (1) sur toute l'étendue du bord arrière de celle-ci de telle façon que la vitesse des articles par rapport à un système de référence fixe relié au récipient (8) durant l'évacuation a une composante nulle dans la direction de l'avancement (A).

2. Dispositif selon la revendication 1, caractérisé en ce que ladite plaque de transport (1) forme un angle, de préférence de 30 degrés, par rapport au plan horizontal.

3. Dispositif selon la revendication 1, caractérisé en ce que lesdits moyens d'éjection (10) sont fixes par rapport audit système de référence et sont conçus pour venir en butée contre le bord avant des articles (14), les arrêtant dans ladite direction d'avancement (A).

4. Dispositif selon la revendication 1, caractérisé en ce que ladite plaque de transport est constituée par un plateau de chargement (1) comprenant une pluralité de gorges longitudinales (12) reliées entre elles par des bandes de transport longitudinales lisses (2), ledit plateau étant limité de manière longitudinale par des parois verticales (3) s'étendant au-dessus desdites bandes (3) et, au niveau de la partie arrière, par des moyens formant cloisonnement (4, 4') susceptibles d'être ouverts sur commande.

5. Dispositif selon les revendications 3 et 4, caractérisé en ce que lesdits moyens d'éjection (10) comprennent:
- une pluralité de secteurs (10) situés dans le même plan, fixés de manière rigide l'un avec l'autre au niveau d'une première extrémité, et
- des moyens d'actionnement (9) destinés à faire passer, sur commande, lesdits secteurs (10') d'une position de repos, hors de ladite plaque de transport, dans une position de fonctionnement, dans laquelle ils sont chacun insérés dans une correspondante desdites gorges (12) dudit plateau (1).

6. Dispositif selon la revendication 5, caractérisé en ce que lesdits secteurs (10') sont montés sur un axe horizontal (11) s'étendant de manière transversale par rapport à ladite direction d'avancement (A) et au-dessus du bord avant dudit plateau (1), ledit axe étant actionné par un moteur (9) relié à la structure fixe de l'installation et capable de faire tourner d'un quart de tour ledit axe horizontal (11) de manière a faire passer lesdits secteurs (10') de leur position horizontale de repos dans une position verticale de fonctionnement, et vice-versa.

7. Dispositif selon la revendication 4, caractérisé en ce que lesdits moyens formant cloisonnement comprennent:
- un cadre rectangulaire (4) ayant un côté disposé de manière articulée sur ledit plateau près du bord arrière de celui-ci et susceptible d'être amené par rotation dans un plan vertical,
- un mécanisme de levier (5) destiné à faire tourner ledit cadre et se terminant par un galet (5') conçu pour venir en butée contre une came (6) reliée audit système de référence et susceptible de coulisser sur commande,
- une pluralité de secteurs verticaux (4') fixés sur le côté dudit cadre à l'opposé du côté articulé et conçus pour constituer une paroi de cloisonnement arrière,
- un cliquet formant came (13) fixé audit plateau (1) et conçu pour limiter la rotation dudit cadre (4), le maintenant dans sa position, et
- des moyens de rappel destinés à ramener ledit cadre dans sa position de clôture une fois que les articles ont quitté le plateau.

8. Installation destinée à trier et à empiler des articles sensiblement plats dans des récipients en forme de boîte destinés à cet effet, pour confectionner des emballages, dans laquelle les articles identifiés par un premier code à barres sont transportés suivant une trajectoire en boucle fermée, traversant au moins un poste de chargement comprenant au moins un point de chargement alimenté de manière successive en articles à trier, un poste de lecture destiné à lire les codes et à reconnaître les articles, et au moins un poste de tri comprenant au moins une succession de dits récipients, caractérisée en ce qu'elle comprend au moins un dispositif destiné à transporter les articles le long de ladite trajectoire fermée du type énoncé dans les revendications qui précèdent.

9. Installation selon la revendication 8, comprenant en outre des moyens disposés en amant dudit poste de lecture destinés à fixer un deuxième code à barres sur les articles.

10. Installation selon la revendication 9, caractérisée en ce que ledit deuxième code à barres comprend l'indication de la destination et du prix de l'article.
